# FASCICULE DE BREVET EUROPEEN

(11) **EP 3 320 208 B1**
(45) Date de publication et mention de la délivrance du brevet: **28.08.2019**
(21) Numéro de dépôt: 16750927.2
(22) Date de dépôt: 06.07.2016
(51) Int. Cl.: F03H 1/00

(54) **PROPULSEUR A EFFET HALL EXPLOITABLE EN HAUTE ALTITUDE**
IN HOHER FLUGHÖHE VERWENDBARES HALL-EFFEKT-TRIEBWERK
HALL-EFFECT THRUSTER USABLE AT HIGH ALTITUDE

(30) Priorité: 08.07.2015 FR 1556477
(43) Date de publication de la demande: 16.05.2018
(73) Titulaire: Safran Aircraft Engines, 75015 Paris (FR)
(72) Inventeur: MARCHANDISE, Frédéric, Raphaël , Jean, 27200 Vernon (FR); ZURBACH, Stéphan, 27200 Vernon (FR)
(74) Mandataire: Cabinet Beau de Loménie
(86) Numéro de dépôt international: PCT/FR2016/051715
(87) Numéro de publication internationale: WO 2017/006056

(56) Documents cités:
- US-A1- 2003 046 921
- US-A1- 2005 178 919
- US-A1- 2008 116 808
- Thomas John Mcguire: "Aero-Assisted Orbital Transfer Vehicles Utilizing Atmosphere Ingestion", , 8 juin 2001 (2001-06-08), XP055273477, Extrait de l'Internet: URL:http://ssl.mit.edu/files/website/these s/SM-2001-McGuireThomas.pdf [extrait le 2016-05-19]
- Francesco Romano ET AL: "Air-Intake Design Investigation for an Air- Breathing Electric Propulsion System", , 4 juillet 2015 (2015-07-04), pages 1-27, XP055273145, DOI: 10.13140/RG.2.1.2500.4646 Extrait de l'Internet: URL:https://www.researchgate.net/publicati on/279975953 [extrait le 2016-05-18]

## Description

### DOMAINE DE L'INVENTION

La présente invention concerne le domaine des propulseurs à effet Hall à alimentation atmosphérique.

### ARRIERE-PLAN TECHNOLOGIQUE

Le document US2003/046921 décrit un propulseur à effet Hall à alimentation atmosphérique. Un tel propulseur utilise les particules de l'atmosphère résiduelle dans laquelle il évolue pour fonctionner.

Les propulseurs à effet Hall à alimentation atmosphérique sont principalement utilisés pour propulser des satellites d'observation ; ces propulseurs sont particulièrement utiles en orbite basse.

A cette altitude, l'atmosphère résiduelle freine les satellites, ce qui limite leur durée de vie. Avantageusement, les propulseurs à effet Hall à alimentation atmosphérique permettent de compenser cette traînée, et d'augmenter ainsi la durée de vie des satellites.

Cependant, compte tenu de la raréfaction de l'atmosphère avec l'altitude, ces propulseurs ne peuvent fonctionner au-delà d'une altitude voisine de 100 km. Ils sont donc inutilisables à des altitudes supérieures à celle-ci, comme par exemple pour permettre le transfert de satellites vers des orbites plus hautes.

Par ailleurs, le document US2008/116808 décrit une technologie de propulseur à plasma pouvant être mise en oeuvre sur une paroi externe.

### PRESENTATION DE L'INVENTION

Le but de l'invention est donc de proposer un propulseur à effet Hall à alimentation atmosphérique apte à fonctionner à une altitude plus élevée que les propulseurs à effet Hall traditionnels.

Un premier aspect de l'invention concerne tout d'abord les propulseurs à effet Hall comprenant un canal (interne) pour l'accélération des particules.

Selon ce premier aspect de l'invention, l'objectif indiqué précédemment est atteint au moyen d'un propulseur à effet Hall pour développer une poussée suivant un axe de poussée, le propulseur comprenant :
un canal permettant la collecte, l'accélération et l'éjection de particules par le propulseur lorsque celui-ci est en fonctionnement, le canal étant délimité radialement par une paroi interne et une paroi externe ;
un circuit électrique comprenant une anode, une cathode, et une source de tension électrique pour émettre des électrons via la cathode et attirer des électrons via l'anode ;
un circuit magnétique pour générer un champ magnétique dans le canal axialement en aval de l'anode, le champ magnétique étant dirigé suivant une direction sensiblement radiale par rapport à l'axe de poussée ;
le propulseur se caractérisant en ce que
le canal est ouvert sur un côté amont du propulseur et comporte un concentrateur de particules pour collecter des particules ;
la forme du concentrateur est définie par un contour continu situé dans un plan perpendiculaire à l'axe de poussée et entourant celui-ci;
sur une majeure partie du contour, à savoir au moins 50% du contour et de préférence au moins 75% du contour, chaque coupe du concentrateur perpendiculairement au contour est de forme parabolique et présente un foyer appartenant au contour ; et
le circuit magnétique est agencé de manière à générer le champ magnétique au voisinage du contour.

De manière connue en soi, la cathode est placée en aval de l'anode. En outre, le circuit électrique est agencé de telle sorte que le champ électrique soit généré suivant une direction globalement axiale (celle de l'axe de poussée) entre l'anode et la cathode.

En général, en aval du concentrateur le canal présente en outre une partie arrière cylindrique ou sensiblement cylindrique. Par partie arrière 'cylindrique', on désigne ici une partie arrière dont la surface est engendrée par le déplacement suivant une direction d'un contour fermé ; ici, cette direction est l'axe de poussée. La partie arrière du canal sert alors à canaliser et diriger les particules lors de leur accélération et de leur éjection par le propulseur.

Cette partie arrière s'étend en général directement à partir de la limite aval du concentrateur.

Le canal a généralement une forme annulaire ; il présente donc une paroi interne et une paroi externe. Dans un mode de réalisation préférentiel, le circuit magnétique comporte une pluralité de bras de liaison agencés de manière à relier la paroi interne et la paroi externe du canal.

Le fait que le contour entoure l'axe de poussée (naturellement, en vue suivant cet axe), signifie que le contour fait le tour de cet axe en vue suivant l'axe de poussée.

Par ailleurs, le terme 'source de tension' désigne dans ce document de manière large un dispositif susceptible de générer une tension. Cette tension n'a pas nécessairement à être constante ni même périodique dans le temps. Par suite, une source de courant configurée pour délivrer un courant d'intensité constante constitue une source de tension au sens de la présente invention.

Dans un mode de réalisation, la source de tension est commandable : elle est configurée pour que la tension électrique qu'elle applique entre l'anode et la (ou les) cathode(s) puisse être inversée sur commande. En cas d'inversion, les rôles de l'anode et de la cathode (ou des cathodes) dans le circuit électrique sont inversés.

Cette inversion permet d'inverser le sens de la force appliquée par le propulseur, et d'utiliser celui-ci comme système de freinage, par exemple pour freiner un satellite lors d'une rentrée dans l'atmosphère.

D'autre part, un deuxième aspect de l'invention concerne une configuration de propulseur spécifique, dans laquelle les particules sont accélérées non pas à l'intérieur du canal indiqué précédemment, au coeur du propulseur, mais au contraire à l'extérieur de celui-ci, autour de la paroi. Malgré cette différence importante, le principe de fonctionnement du propulseur à effet Hall reste cependant sensiblement identique à celui des propulseurs à effet Hall antérieurs.

Selon ce deuxième aspect de l'invention, l'objectif de l'invention indiqué précédemment est atteint au moyen d'un propulseur à effet Hall pour développer une poussée suivant un axe de poussée, le propulseur comportant :
un circuit magnétique pour générer un champ magnétique ;
un circuit électrique comprenant une anode, une première cathode, et une source de tension électrique pour émettre des électrons au moins via la première cathode et attirer des électrons via l'anode ;
le propulseur se caractérisant en ce que
   - le propulseur est agencé à l'intérieur d'une paroi formée autour de l'axe de poussée ;
   - le circuit magnétique et le circuit électrique sont agencés de manière à générer des champs magnétique et électrique autour de la paroi ; et
   - dans toute coupe parallèle à l'axe de poussée et perpendiculaire à la paroi :
      le circuit magnétique présente un pôle magnétique amont et un pôle magnétique aval, disposés sensiblement à la surface de la paroi à distance l'un de l'autre, et
      le circuit magnétique est agencé de telle sorte que le champ magnétique soit orienté suivant une direction sensiblement radiale (et ainsi perpendiculaire) par rapport à l'axe de poussée au droit du pôle magnétique amont ;
      l'anode et la première cathode sont situées de part et d'autre du pôle magnétique amont ;
   - la paroi comporte un concentrateur de particules servant à concentrer des particules ;
      la forme du concentrateur étant définie par un contour (ou courbe) fermé situé dans un plan perpendiculaire à l'axe de poussée et faisant le tour de la paroi ;
      sur une majeure partie du contour, à savoir au moins 50% du contour et de préférence au moins 75% du contour, chaque coupe du concentrateur perpendiculairement au contour étant de forme parabolique et présentant un foyer appartenant au contour ;
      le circuit magnétique étant agencé de manière à générer le champ magnétique au voisinage du contour.

La paroi mentionnée précédemment est habituellement la paroi externe du carter de l'engin spatial sur lequel le propulseur est monté.

En aval du concentrateur, cette paroi peut comporter en outre une partie arrière cylindrique ou sensiblement cylindrique. Cette partie arrière constitue un bouclier servant à protéger l'arrière du satellite des ions éjectés par le propulseur et d'autres particules incidentes.

Les caractéristiques énoncées précédemment, que ce soit en référence au premier ou au deuxième aspect de l'invention, permettent au propulseur avantageusement d'avoir une alimentation en particules suffisante et cela même si l'engin spatial évolue à haute altitude.

En effet, une bonne partie des particules qui se trouvent sur la trajectoire de l'engin spatial heurtent le concentrateur. Celui-ci a une forme spécifique avec ses sections qui présentent une forme parabolique (c'est-à-dire une forme de portion de parabole).

Du fait de cette forme, les particules qui heurtent la paroi du concentrateur sont toutes dirigées sensiblement dans une même zone, à savoir vers le foyer de la parabole.

Par suite, le concentrateur permet de concentrer toutes les particules qu'il collecte dans un volume assez restreint. Il s'ensuit qu'au voisinage de ce point, la densité de particules s'élève et dépasse nettement la densité de particules de l'atmosphère résiduelle.

Il est ainsi possible avantageusement dans cette zone d'élever la densité de particules à une valeur suffisante pour l'alimentation du propulseur à effet Hall (de l'ordre de 10²⁰ particules par m³).

On comprend qu'il convient de dimensionner le diamètre et plus généralement les dimensions des parois du concentrateur de manière à assurer que cette densité de particules est bien atteinte, en prenant en compte l'altitude et la vitesse auxquelles il est prévu d'exploiter le satellite.

Les particules concentrées au voisinage du foyer de la parabole sont utilisées comme gaz d'alimentation du propulseur.

Du fait de l'agencement notamment de son circuit électrique et de son circuit magnétique, le propulseur est conçu de manière à générer une grille cathodique formée d'électrons bloqués par le champ magnétique à l'endroit ou du moins au voisinage du foyer de ces paraboles.

Les particules happées par l'engin spatial sont donc dirigées par le concentrateur vers le foyer de la parabole et donc vers la grille cathodique virtuelle du propulseur. Elles s'ionisent alors et sont accélérées vers l'arrière du propulseur sous l'effet du champ électrique généré entre l'anode et la cathode du circuit électrique.

Ainsi, l'agencement du propulseur et notamment de son concentrateur permet donc de pallier à la faible densité de particules à haute altitude, en concentrant les particules se trouvant sur la trajectoire du satellite dans une zone réduite, dans laquelle elles peuvent être accélérées de manière à générer une poussée pour l'engin spatial.

Le propulseur configuré suivant le deuxième aspect de l'invention peut comporter éventuellement, comme dans le premier aspect de l'invention, une source de tension commandable dont les pôles peuvent être inversés pour permettre d'utiliser le propulseur comme système de freinage.

Que ce soit suivant le premier ou le deuxième aspect, l'invention peut avantageusement être mise en oeuvre en intégrant un ou plusieurs des perfectionnements suivants : le contour à partir duquel la forme du concentrateur est définie peut être notamment un cercle, ou une ellipse, ou un ovale ; l'anode peut constituer une portion de la paroi ou de l'une desdites parois ; l'anode peut être formée en creux dans la paroi ou l'une desdites parois.

Enfin, l'invention concerne également un engin spatial incorporant au moins un propulseur à effet Hall tel que défini précédemment.

A ce titre, elle concerne notamment un engin spatial incorporant au moins un propulseur à effet Hall suivant le premier aspect de l'invention, l'engin spatial étant configuré pour emporter une charge utile disposée radialement à l'intérieur de la paroi interne du canal du propulseur.

Dans un mode de réalisation d'un tel engin spatial, le contour peut être un cercle, ou une ellipse, ou un ovale.

Dans un mode de réalisation d'un tel engin spatial, l'anode peut constituer une portion de l'une des parois du canal du propulseur.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux figures annexées sur lesquelles :
- la figure 1 est une coupe longitudinale d'un propulseur pour engin spatial, conforme au premier aspect de l'invention ;
- la figure 2 est une vue en perspective d'un satellite comprenant le propulseur de la figure 1 ;
- la figure 3 est une coupe longitudinale engin spatial comprenant un propulseur conforme au deuxième aspect de l'invention ; et
- la figure 4 est une vue en perspective du satellite de la figure 3.

### DESCRIPTION DETAILLEE DE L'INVENTION

Deux modes de réalisation de l'invention correspondant respectivement à son premier et à son deuxième aspect vont maintenant être présentés à travers les exemples de deux satellites 1 et 101, comportant respectivement un propulseur 10 et un propulseur 110, tous deux conformes à l'invention.

Ces satellites 1 et 101 sont des satellites qui ont vocation à évoluer dans l'atmosphère terrestre en demeurant entre 100 et 300 km d'altitude.

Avantageusement, cette altitude est relativement basse, ce qui permet que certains équipements (équipements de communication, caméras, etc.) aient une taille et donc une masse relativement faibles. Inversement, à cette altitude l'atmosphère terrestre oppose une résistance faible, mais non nulle, au passage du satellite. Il est donc nécessaire de compenser la trainée induite.

La fonction du propulseur à effet Hall que comporte chacun de ces satellites est fournir une poussée au satellite, permettant de maintenir celui-ci en fonctionnement à l'altitude souhaitée.

Il permet également d'assurer des changements ou des corrections d'orbites.

Avantageusement, un propulseur suivant l'invention comme ceux embarqués à bord de ces satellites, couplé à des moyens d'alimentation en énergie électrique comme des panneaux solaires, est en mesure de fournir sur de très longues durées la poussée nécessaire au maintien en altitude du satellite.

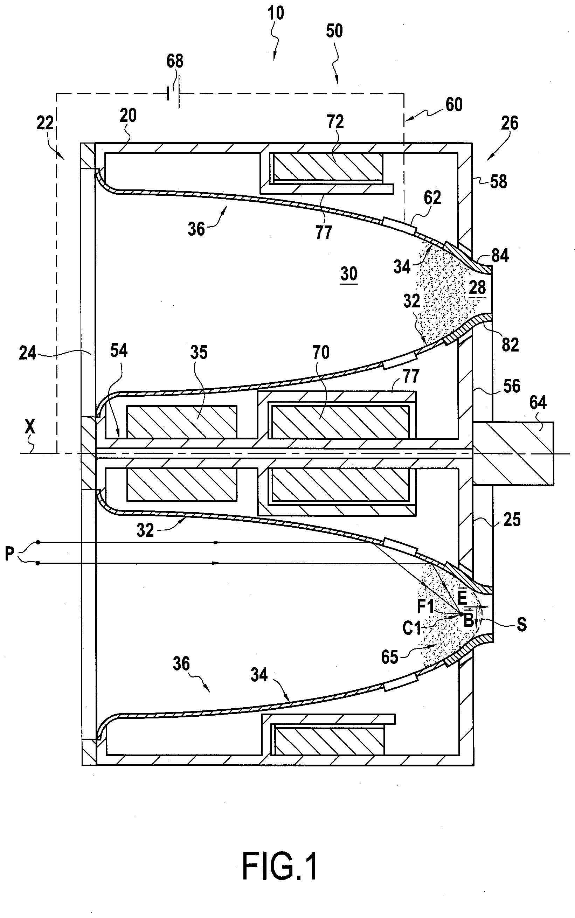

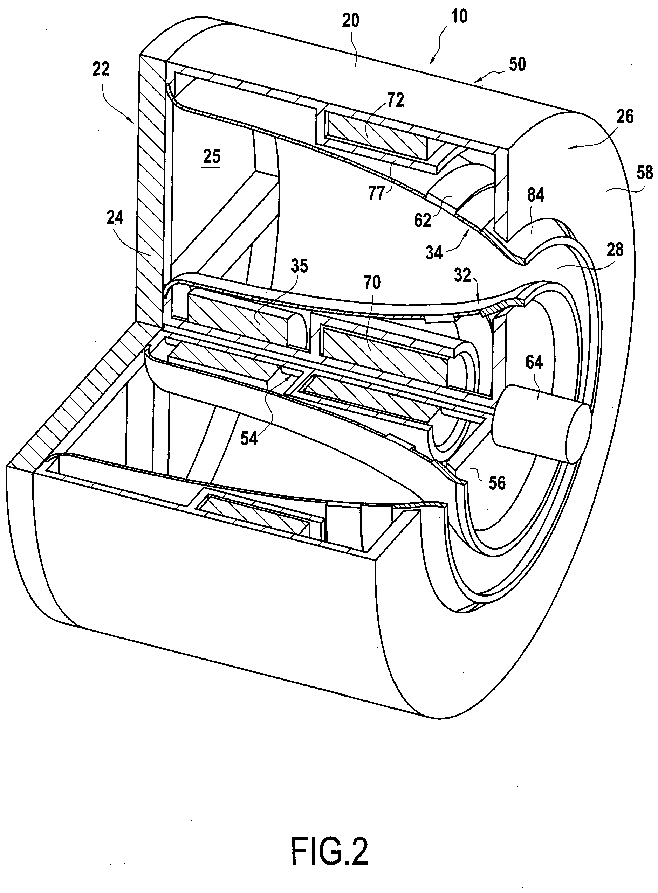

Le premier mode de réalisation illustre le premier aspect de l'invention en relation avec les figures 1 et 2.

Les figures 1 et 2 représentent le propulseur 10 du satellite 1 (un exemple d'engin spatial), qui est un propulseur à effet Hall à alimentation atmosphérique.

Le propulseur 10 a globalement une forme de révolution autour d'un axe de poussée X. Il est agencé à l'intérieur d'un carter 20 de forme sensiblement cylindrique d'axe X. L'extrémité amont 22 de ce carter est ouverte alors que l'autre extrémité 26 (extrémité aval) est partiellement fermée par un fond sensiblement plat 25 perpendiculaire à l'axe X. Le fond 25 est traversé cependant par un passage annulaire 28 d'éjection de particules.

Le fond 25 a une forme générale de disque perpendiculaire à l'axe X. Du fait de la présence du passage 28, le fond 25 est constitué par un disque 56, et par une couronne annulaire 58 située radialement autour du passage annulaire 28. La couronne 58 est formée intégralement avec le reste du carter 20.

A l'intérieur du carter 20, le propulseur 10 comporte un canal 30 de forme générale annulaire autour de l'axe X. Plus généralement, ce canal 30 peut également être axisymétrique. Toutefois, des formes non-axisymétriques peuvent être alternativement envisagées, par exemple, à section transversale ovale ou en hippodrome.

Le canal 30 est de forme générale annulaire et comporte une paroi radialement externe 34 et une paroi radialement interne 32, qui sont concentriques autour de l'axe X.

Le canal 30 est essentiellement constitué par un concentrateur de particules 36, qui s'ouvre du côté amont (à gauche sur la figure 1) du satellite 1 et sert à collecter les particules se trouvant sur la trajectoire du satellite.

Du côté aval, le concentrateur 36 débouche sur le passage annulaire 28, qui est lui-même ouvert du côté aval du satellite 1 pour permettre l'éjection des particules accélérées par le propulseur 10.

Conformément à l'invention, la forme du concentrateur 36 est définie par un contour C1 continu. Dans ce mode de réalisation, ce contour C1 est un cercle, situé dans un plan perpendiculaire à l'axe de poussée. Le cercle C1 est centré sur l'axe X (et par conséquent, il entoure cet axe).

Dans un plan quelconque perpendiculaire au cercle C1 (c'est-à-dire dans ce mode de réalisation, dans un plan méridien quelconque), la coupe du concentrateur est celle qui est représentée sur la figure 1 : Elle présente une forme parabolique S, dont le foyer F1 appartient au cercle C1 (Seule une partie de la parabole S sert à définir la forme du concentrateur 36).

Le cercle C1 est positionné de manière à être situé axialement au niveau du passage annulaire 28.

Du côté amont, le propulseur 10 comporte en outre des bras de liaison 24 qui assurent une liaison mécanique entre les parois interne et externe 32 et 34 du canal 30. Entre les bras 24 sont formées quatre ouvertures 25 par lesquelles des particules P pénètrent dans le canal 30.

Le propulseur 10 comporte un circuit magnétique 50 et un circuit électrique 60.

Le circuit magnétique 50 comprend : le carter 20 lui-même, qui est réalisé en matériau ferromagnétique et forme ainsi un noyau magnétique externe ; les fonds 24 et 25, réalisés en matériau ferromagnétiques ; et un noyau magnétique central 54 en forme d'arbre, qui s'étend suivant l'axe X. Le disque 56 qui constitue une partie du fond 25 forme l'extrémité aval de l'arbre 54.

L'ensemble des éléments du circuit magnétique 50 indiqués précédemment sont agencés de manière à permettre une circulation sans pertes d'un champ magnétique à travers le circuit magnétique.

Pour protéger de l'usure la partie aval du canal et contenir le nuage électronique formé dans l'entrefer du circuit magnétique, les parties axialement aval des parois 32 et 34 sont formées par des bagues en matériau céramique 82 et 84, positionnées au niveau du passage annulaire 28.

Le circuit magnétique 50 comporte en outre une bobine annulaire interne 70 et une bobine annulaire externe 72, qui servent à générer le champ magnétique B nécessaire au fonctionnement du propulseur à effet Hall. Ces deux bobines sont formées de manière concentrique autour de l'axe X. Ce sont des bobines de forme sensiblement cylindriques, dont chacune des spires est sensiblement un cercle d'axe X.

La bobine 70 est formée autour de l'arbre 54 à l'intérieur (radialement) de la paroi 32 (c'est-à-dire, entre l'arbre 54 et la paroi 32). La bobine 72 est formée sur la face interne du carter cylindrique 20, et plus précisément entre cette face interne et la paroi externe 34 du canal 30. Les bobines 70 et 72 sont alimentées par une source d'énergie électrique non représentée.

Dans le circuit magnétique 50, le noyau magnétique central 54 et le noyau magnétique externe (le carter 20) sont disposés de telle sorte que leurs polarités soient opposées.

Le circuit 50 est agencé de manière à générer un champ magnétique B sensiblement radial dans le passage annulaire 28, qui constitue ainsi l'entrefer du circuit 50. Ainsi, la partie aval du canal 30 passe ou s'étend dans l'entrefer 28 du circuit 50.

Dans le canal 30, l'intensité du champ magnétique B est maximale au niveau (axialement) du passage annulaire 28.

D'autre part, comme indiqué précédemment le propulseur 10 comprend aussi un circuit électrique 60.

Ce circuit comprend une anode 62 située axialement légèrement en amont du passage annulaire 28, une cathode 64 située en majeure partie en aval de l'extrémité 26 du canal 30 (et donc en aval du passage 28), et une source de tension électrique 68 reliant l'anode 62 à la cathode 64.

Dans ce mode de réalisation, la source de tension 68 est commandable (bien que cela ne soit pas représenté sur les figures) : sa tension électrique peut être inversée afin d'inverser la poussée du propulseur.

L'anode 62 forme une partie de la paroi interne 34 du canal 30 : elle est ainsi intégrée à ce canal, tout en étant électriquement isolée de celui-ci (et notamment de la paroi 34).

Au voisinage de l'anode 62, le champ magnétique B engendré par le circuit magnétique 50 est atténué par des écrans magnétiques interne et externe 77 formés respectivement sur la surface interne du carter 20 et sur la surface externe de l'arbre 54. Ces écrans 77 servent également à soutenir mécaniquement les bobines 70 et 72.

La cathode 64 est située à l'extérieur de l'extrémité aval ouverte du canal annulaire 28. Dans le mode de réalisation des figures 1 et 2, elle est fixée sur le disque 56, du côté extérieur c'est-à-dire en aval de l'arbre 54. Sur la figure 2, la cathode 64 est représentée en pointillés.

Dans un autre mode de réalisation, la cathode 64 peut être fixée non pas sur le disque 56, mais plutôt sur la surface extérieure (du côté aval ou arrière) de la couronne 58. La cathode peut alors avoir notamment une forme annulaire, et non la forme de plot représentée sur la figure 2.

La cathode 64 est reliée à la source de tension électrique 66 par un câble circulant à l'intérieur de la paroi interne 32 du canal 30, et plus précisément, à l'intérieur de l'arbre 54.

Dans le mode de réalisation des figures 1 et 2, le volume disponible à l'intérieur (radialement) de la paroi 32 est aménagé pour accueillir une charge utile 35 du satellite 1.

Celle-ci est disposée radialement à l'intérieur de la paroi interne 32, comme illustré sur les figures 1 et 2.

Dans un autre mode de réalisation le propulseur peut être conçu spécifiquement avec un volume intérieur beaucoup plus grand à l'intérieur de la paroi 32. Une grande partie, voire la totalité de la charge utile peut alors être disposée dans ce volume, à l'intérieur de la paroi interne 32 du canal 30 du propulseur.

Dans ce cas, le propulseur est agencé en pratique sous forme d'une structure annulaire disposée autour de la charge utile du satellite ou plus généralement de l'engin spatial.

Le fonctionnement du propulseur 10 va maintenant être décrit. Ce fonctionnement est globalement identique à celui du propulseur décrit par le document US2003/0046921 A1.

Lorsque le satellite 1 se déplace à haute vitesse dans l'atmosphère, les particules se trouvant sur sa trajectoire sont happées par le concentrateur 36 et pénètrent dans celui-ci.

Comme le montre la figure 1, lorsqu'une particule P pénètre ainsi dans le concentrateur 36, elle heurte le plus souvent l'une des parois 32 ou 34 de celui-ci.

Or, il a été constaté que les particules rebondissent de manière quasiment spéculaire sur les parois de satellites ou d'engins spatiaux. En d'autres termes, les chocs entre une particule et une paroi du satellite semblent se faire sans frottement, c'est-à-dire que l'angle d'incidence et l'angle d'éjection de la particule vis-à-vis de la paroi sont égaux.

Par conséquent, suite à ce choc et du fait des propriétés du foyer d'une parabole, une particule P qui heurte une paroi 32 ou 34 du concentrateur 36 est renvoyée vers le foyer F1, c'est-à-dire vers un point du cercle C1.

Ainsi le concentrateur permet avantageusement de diriger les particules happées par le satellite 1 dans une zone assez réduite située au voisinage du cercle C1.

Ce cercle C1 est positionné de manière à être situé à l'endroit où le champ magnétique radial B généré par le circuit magnétique est le plus intense, c'est-à-dire au niveau du passage annulaire 28.

De plus simultanément, une tension électrique, typiquement de l'ordre de 150 à 800 V est établie entre la cathode 64 en aval de l'extrémité aval du canal 30 et l'anode 62. La cathode 64 émet donc des électrons, lesquels sont en grande partie piégés dans une 'enceinte magnétique' formée par le champ magnétique B. Cette enceinte magnétique est adaptée aux performances souhaitées et est typiquement de l'ordre de 100 à 300 gauss. Les électrons piégés dans cette enceinte magnétique forment donc une grille cathodique virtuelle 65, formant sensiblement un anneau suivant le cercle C1 à l'intérieur du canal 30.

Un champ électrique E est ainsi généré dans le canal 30, au niveau du passage annulaire 28 (Fig.1) et en amont de celui-ci jusqu'à l'anode 62, et notamment au niveau de la grille cathodique virtuelle 65.

Une faible partie des électrons ainsi piégés, à savoir ceux qui sont les plus énergétiques (typiquement 10 à 40 eV), échappent cependant à l'enceinte magnétique et rejoignent l'anode 62.

Comme cela a été indiqué précédemment, les particules P qui sont capturées par le satellite 1 sont concentrées par le concentrateur 36 au voisinage du cercle C1. Elles entrent donc dans la grille cathodique virtuelle 65 formée par les électrons piégés par le champ magnétique B.

Les impacts entre ces électrons et les particules P ionisent celles-ci. Du fait de leur charge électrique, les particules ionisées sont alors accélérées vers l'extrémité aval 26 du canal 30 par le champ électrique E. Comme la masse des particules ionisées est de plusieurs ordres de magnitude plus élevée que celle des électrons, le champ magnétique ne confine pas ces ions comme il le fait pour les électrons. Le propulseur 10 génère donc un jet plasmique qui est éjecté à une vitesse extrêmement élevée à travers l'extrémité aval du canal 30. Le propulseur 10 produit ainsi une poussée, sensiblement alignée avec l'axe central X.

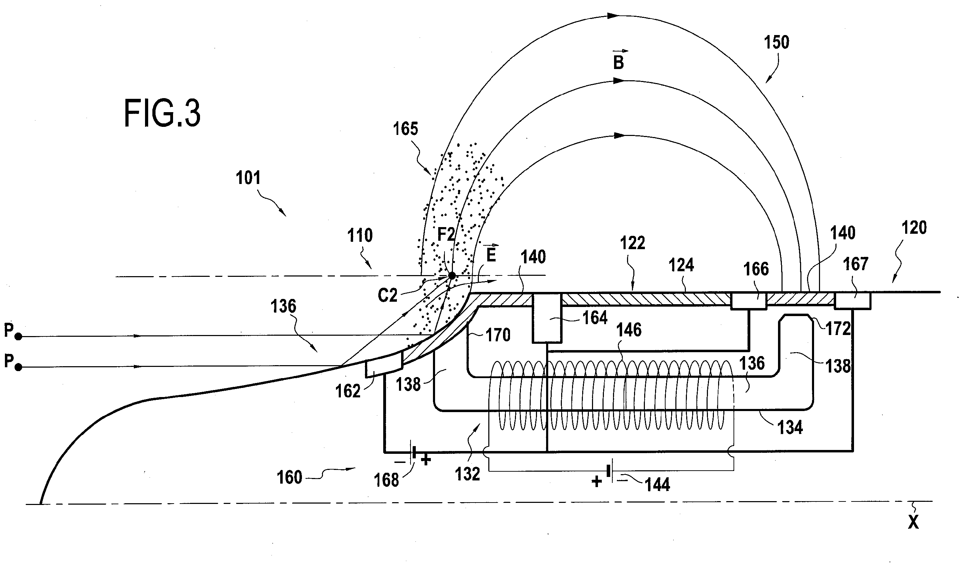

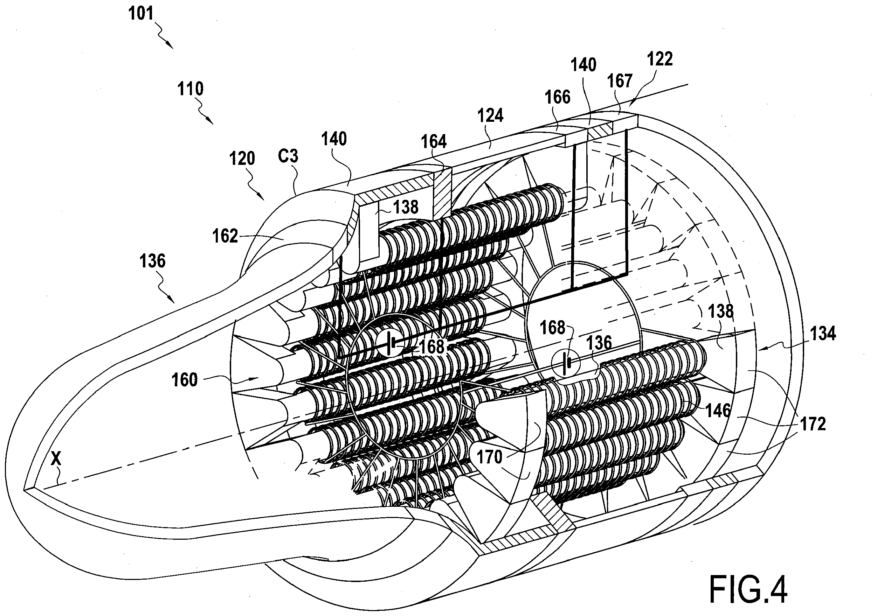

Le deuxième mode de réalisation, qui illustre le deuxième aspect de l'invention, va maintenant être présenté en relation avec les figures 3 et 4.

La figure 3 représente un satellite 101, comportant un propulseur 110 à effet Hall selon l'invention.

Le satellite 101 est agencé dans un carter de protection extérieure 120 qui a globalement une forme de révolution autour d'un axe X. Le propulseur 110 est agencé à l'intérieur de la paroi externe 122 du carter 120.

Le propulseur 110 a une structure axisymétrique autour de l'axe X. Les termes « amont » et « aval », dans le présent contexte, sont définis par rapport au sens de circulation normal du satellite et donc du propulseur.

La paroi 122 présente deux parties, à savoir un concentrateur de particules 136, qui sert à concentrer les particules P se trouvant sur la trajectoire du satellite 101 ou au voisinage de celle-ci, et une partie arrière 124 située en aval du concentrateur 136.

La forme du concentrateur 136 est définie par un contour C2 continu. Comme dans le mode de réalisation précédent, le contour C2 est un cercle. Il est situé dans un plan perpendiculaire à l'axe de poussée X et fait le tour de la paroi 120.

En coupe dans un plan quelconque perpendiculaire au contour C2, le concentrateur 122 présente une forme parabolique avec un foyer F2 appartenant au contour C2.

Le concentrateur 136 et la partie arrière 124 se rejoignent au niveau d'une arête formant un cercle C3 (Fig.4).

La partie arrière 124 de la paroi 120 est de forme cylindrique d'axe X ; sa forme est celle engendrée par le déplacement du cercle C3 vers l'arrière suivant la direction de l'axe X.

Le propulseur 110 comporte un circuit magnétique 150 et un circuit électrique 160.

Le circuit magnétique 150 est agencé de manière à créer un champ magnétique sensiblement radial au niveau (axialement, par référence à l'axe X) de la partie amont de la paroi 122.

Pour cela, il comporte une pluralité de circuits magnétiques élémentaires identiques 132, répartis de manière axisymétriques autour de l'axe X.

Chaque circuit 132 comporte un noyau en fer doux 134 qui dans une coupe axiale a une forme de U. Le noyau 134 comporte une longue tige 136 qui s'étend parallèlement à l'axe X à proximité de la paroi 122 (et à l'intérieur de celle-ci). Il comporte également deux tronçons coudés 138 qui sont coudés dans un plan radial vers la paroi 122, de telle sorte que l'extrémité de ces tronçons soit disposée juste sous la surface de la paroi 122. En regard de ces tronçons 138, le carter 120 comporte des bagues 140 en matériau amagnétique afin de permettre le passage du champ magnétique. Les bagues 140 peuvent par exemple être en céramique, en carbone cubique polycrystallin (c'est-à-dire en diamant) ou en alumine.

Chaque circuit 132 comporte également une bobine 146 formant un solénoïde agencé autour de la tige 136.

Les bornes des bobines 146 des circuits 132 sont reliées à celles d'une source de tension 144. Cette source de tension est choisie de telle sorte que sous l'effet de la tension appliquée aux bobines 146, un champ magnétique stable B puisse être créé autour de la paroi. Une source de courant peut aussi être utilisée.

Par suite, lorsqu'une tension est appliquée par la source de tension 144 aux bobines 146, chaque circuit magnétique 132 génère un champ magnétique B. Ce champ est rayonné par le circuit 132 à l'extérieur du satellite 101 dans l'espace au voisinage du satellite. Les lignes de champ formées sont représentées sur la figure 3. Comme le montre cette figure, les extrémités des tronçons coudés 138 forment donc des pôles magnétiques pour les circuits 132, à savoir un pôle magnétique amont 170 et un pôle magnétique aval 172.

Au droit d'un pôle magnétique amont 170, le champ magnétique B est orienté suivant une direction sensiblement sensiblement radiale par rapport à l'axe de poussée (X) (c'est-à-dire perpendiculaire à cet axe et passant par celui-ci).

Comme on peut le voir sur la figure 4, les pôles magnétiques amont 170 de deux circuits magnétiques élémentaires 132 adjacents sont formés de manière à être proches l'un de l'autre, ou même si possible à être en contact. Il en va de même pour les pôles magnétiques aval 172. Cela permet que le circuit magnétique présente un pôle magnétique amont et un pôle magnétique aval dans tout plan axial, qui génèrent le champ magnétique B. Grâce à cela, le champ magnétique B est généré de manière sensiblement uniforme sur toute la périphérie de la paroi 122.

Les pôles magnétiques amont 170 sont formés au niveau (axialement) du contour C2. Ainsi, le circuit magnétique 150 est agencé de telle sorte que le champ magnétique B généré au droit du pôle magnétique amont soit généré au voisinage du contour C2.

Le propulseur 110 comprend aussi un circuit électrique 160. Ce circuit comprend une anode 162, une première cathode 164, une deuxième cathode 166, une troisième cathode 167 et une source de tension électrique 168 reliant l'anode 162 à la première, la deuxième cathode et la troisième cathodes 164,166, 167. L'anode 162 est située axialement en amont du pôle magnétique amont 170. La première cathode 64 est située en aval du pôle magnétique amont 170 mais au voisinage immédiat de celui-ci et donc à une certaine distance en amont du pôle magnétique aval 172.

La deuxième cathode 166 est située entre le pôle magnétique amont 170 et le pôle magnétique aval 172. Elle est donc en aval du pôle magnétique amont 170, et en amont du pôle magnétique aval 172.

La troisième cathode 167 est située en aval du pôle magnétique aval 172.

Chacune des cathodes 166 et 167 est de plus située à proximité du pôle magnétique aval 172, et donc à une certaine distance en aval de la première cathode 164.

L'anode 162, ainsi que la première, deuxième et la troisième cathode 164,166,167 sont chacune en forme d'anneau. Chacun de ces anneaux s'étend sur toute la circonférence de la paroi 122 globalement dans un plan perpendiculaire à l'axe X (ou plus précisément, entre deux plans rapprochés perpendiculaires à l'axe X). Chacun de ces cathodes affleure à la surface de la paroi 122 et constitue ainsi une portion de cette paroi.

Le propulseur 110 fonctionne de manière analogue au propulseur 10.

Comme la source de tension 68 dans le mode de réalisation précédent, la source de tension 168 est commandable : sa tension électrique peut être inversée afin d'inverser la poussée du propulseur.

Selon le sens donné à la tension par la source de tension 168, la force générée par le propulseur 110 peut être dans un sens ou dans l'autre, suivant la direction X ; selon le cas, le propulseur agit donc soit comme système moteur, soit comme système de freinage.

Le mode de fonctionnement du propulseur décrit ici est le mode moteur :
Lorsqu'une tension est appliquée par la source de tension 168 entre l'anode 162 et les cathodes 164, 166 et 167, un champ électrique E se forme dans l'espace extérieur au satellite autour de la paroi 122, essentiellement entre l'anode 162 et la première cathode 164. Ce champ est orienté sensiblement suivant une direction parallèle à l'axe X.

De plus, sous l'effet de la tension électrique établie entre les cathodes 164, 166 et 167 en aval et l'anode 162 en amont, les cathodes 164, 166 et 167 commencent à émettre des électrons. Ceux-ci sont en grande partie piégés dans une enceinte magnétique formée par le champ magnétique créé par le circuit magnétique 150, adaptée aux performances souhaitées, et qui peut être typiquement de l'ordre de 100 à 300 gauss. Les électrons piégés dans cette enceinte magnétique vont ainsi former une grille cathodique virtuelle 165. Cependant, certains électrons hautement énergétiques (typiquement 10 à 40 eV) échappent à l'enceinte magnétique et rejoignent l'anode 62.

Du fait du déplacement relatif du satellite 101 par rapport à l'atmosphère, à chaque instant des particules pénètrent dans la grille cathodique virtuelle 165. Les impacts entre les électrons retenus dans cette grille et les atomes de ces particules provoquent l'ionisation de celles-ci. Les particules ionisées, sous l'effet du champ électrique E créé par le circuit électrique 160, sont alors accélérées vers l'arrière du satellite. Le propulseur 110 génère donc un jet plasmique qui est éjecté à une vitesse extrêmement élevée suivant la direction X, vers l'arrière du satellite, en aval de la paroi 122. Pour des raisons de symétrie, la poussée générée est sensiblement alignée avec l'axe central X.

Lorsque le propulseur 110 est en fonctionnement, la deuxième et la troisième cathode 166 et 167 fournissent des électrons aux particules libérées en aval du satellite 100, et assurent ainsi la neutralité électrique de celles-ci.

L'utilisation de la deuxième cathode 166 est optionnelle. C'est principalement la troisième cathode 67, située en aval du pôle magnétique aval 52, qui fournit les électrons nécessaires à la neutralisation des particules accélérées par le propulseur 10.

Avantageusement, le propulseur selon l'invention ne nécessite pas d'alimentation en gaz propulsif, contrairement à la plupart des propulseurs à effet Hall.

De plus, son agencement sur la paroi extérieure du satellite libère une grande partie de l'espace intérieur du satellite, ce qui permet d'y disposer une charge utile importante.

On notera par ailleurs que le champ électrique E engendré par le circuit électrique 160 est extrêmement faible au voisinage du pôle magnétique aval 172. Par suite, la force générée par le propulseur 110 est créée au voisinage du pôle magnétique amont 170 ; en l'absence de champ électrique E au voisinage du pôle magnétique aval 172, quasiment aucune force inverse n'est générée au voisinage de ce dernier pôle.

Avantageusement selon l'invention, il n'est pas nécessaire que le concentrateur dirige les particules qu'il concentre précisément vers le foyer de la parabole définie par sa paroi (dans le cas du propulseur 10) ou par ses parois (dans le cas du propulseur 110). Comme une grille cathodique virtuelle est formée dans un certain volume entourant ce foyer, il suffit que les particules happées par le concentrateur soient dirigées à l'intérieur de ce volume. Cela donne une certaine tolérance quant à la forme de la paroi ou des parois du concentrateur.

## Revendications

1. Propulseur (10) à effet Hall pour développer une poussée suivant un axe de poussée, le propulseur comprenant :
un canal (30) permettant la collecte, l'accélération et l'éjection de particules par le propulseur lorsque celui-ci est en fonctionnement, le canal (30) étant délimité radialement par une paroi interne (32) et une paroi externe (34) ;
un circuit électrique (60) comprenant une anode (62), une cathode (64), et une source de tension électrique (68) pour émettre des électrons via la cathode (64) et attirer des électrons via l'anode (62) ;
un circuit magnétique (50) pour générer un champ magnétique (B) dans le canal (30) axialement en aval de l'anode, le champ magnétique étant dirigé suivant une direction sensiblement radiale par rapport à l'axe de poussée (X) ;
le canal (30) étant ouvert sur un côté amont du propulseur et comportant un concentrateur de particules (36) pour collecter des particules (P) ;
la forme du concentrateur étant définie par un contour continu (C1) situé dans un plan perpendiculaire à l'axe de poussée et entourant celui-ci ;
le propulseur **se caractérisant en ce que**
sur une majeure partie du contour, chaque coupe du concentrateur perpendiculairement au contour est de forme parabolique et présente un foyer (F1) appartenant au contour (C1) ; et
le circuit magnétique (50) est agencé de manière à générer le champ magnétique (B) au voisinage du contour (C1).

2. Propulseur selon la revendication 1, dans lequel le circuit magnétique comporte une pluralité de bras de liaison (24) agencés de manière à relier la paroi interne (32) et la paroi externe (34) du canal, le canal ayant une forme annulaire.

3. Propulseur (110) à effet Hall pour développer une poussée suivant un axe de poussée, le propulseur comportant:
un circuit magnétique (150) pour générer un champ magnétique (B) ;
un circuit électrique (160) comprenant une anode (162), une première cathode (164), et une source de tension électrique (168) pour émettre des électrons au moins via la première cathode (164) et attirer des électrons via l'anode (162) ;
dans lequel:
. le propulseur (110) est agencé à l'intérieur d'une paroi (122) formée autour de l'axe de poussée (X) ;
. le circuit magnétique (150) et le circuit électrique (160) sont agencés de manière à générer des champs magnétique (B) et électrique (E) autour de la paroi (122) ; et
. dans toute coupe parallèle à l'axe de poussée (X) et perpendiculaire à la paroi (122) :
le circuit magnétique (150) présente un pôle magnétique amont (170) et un pôle magnétique aval (172), disposés sensiblement à la surface de la paroi à distance l'un de l'autre, et
le circuit magnétique (150) est agencé de telle sorte que le champ magnétique soit orienté suivant une direction sensiblement radiale par rapport à l'axe de poussée (X) au droit du pôle magnétique amont (170) ;
l'anode (162) et la première cathode (164) sont situées de part et d'autre du pôle magnétique amont (170) ;
. la paroi (120) comporte un concentrateur de particules (136) servant à concentrer des particules (P) ;
la forme du concentrateur étant définie par un contour (C2) fermé situé dans un plan perpendiculaire à l'axe de poussée et faisant le tour de la paroi ;
le propulseur **se caractérisant en ce que**
sur une majeure partie du contour, chaque coupe du concentrateur perpendiculairement au contour étant de forme parabolique et présentant un foyer (F2) appartenant au contour (C2) ;
le circuit magnétique (150) étant agencé de manière à générer le champ magnétique au voisinage du contour (C2).

4. Propulseur suivant l'une quelconque des revendications 1 à 3, dans lequel ledit contour (C1,C2) est un cercle, ou une ellipse, ou un ovale.

5. Propulseur suivant l'une quelconque des revendications 1 à 4, dans lequel l'anode (62,162) constitue une portion de la paroi (122) ou de l'une desdites parois interne et externe (32,34).

6. Propulseur suivant l'une quelconque des revendications 1 à 5, dans lequel l'anode (62,162) est formée en creux dans la paroi (122) ou l'une desdites parois interne et externe (32,34).

7. Engin spatial (1 ;101) incorporant au moins un propulseur (10 ;110) à effet Hall suivant l'une quelconque des revendications 1 à 6.

8. Engin spatial (1 ;101) incorporant au moins un propulseur (10;110) à effet Hall suivant la revendication 1 ou 2, l'engin spatial étant configuré pour emporter une charge utile disposée radialement à l'intérieur de la paroi interne (32) du canal (30).

9. Engin spatial suivant la revendication 8, dans lequel ledit contour (C1) est un cercle, ou une ellipse, ou un ovale.

10. Engin spatial suivant la revendication 8 ou 9, dans lequel l'anode (62) constitue une portion de l'une desdites parois (32,34).

## Patentansprüche

1. Hall-Effekt-Triebwerk (10) zum Entwickeln eines Schubs entlang einer Schubachse, wobei das Triebwerk umfasst:
einen Kanal (30) zum Sammeln, Beschleunigen und Ausstoßen von Partikeln durch das Triebwerk, während es in Betrieb ist, wobei der Kanal (30) radial durch eine Innenwand (32) und eine Außenwand (34) begrenzt ist,
einen Stromkreis (60) mit einer Anode (62), einer Kathode (64) und einer elektrischen Spannungsquelle (68) zum Emittieren von Elektronen über die Kathode (64) und zum Anziehen von Elektronen über die Anode (62),
einen Magnetkreis (50) zum Erzeugen eines Magnetfelds (B) in dem Kanal (30) axial stromabwärts der Anode, wobei das Magnetfeld in eine im Wesentlichen radiale Richtung in Bezug auf die Schubachse (X) gerichtet ist,
wobei der Kanal (30) auf einer stromaufwärts gelegenen Seite des Triebwerks offen ist und einen Partikelkonzentrator (36) zum Sammeln von Partikeln (P) umfasst,
wobei die Form des Konzentrators durch eine kontinuierliche Kontur (C1) definiert ist, die sich in einer Ebene senkrecht zur Schubachse und um diese herum befindet,
wobei das Triebwerk **dadurch gekennzeichnet ist, dass**
über einen großen Teil der Kontur hinweg jeder Schnitt des Konzentrators senkrecht zur Kontur parabolisch geformt ist und einen zur Kontur (C1) gehörenden Fokus (F1) aufweist und
der Magnetkreis (50) so angeordnet ist, dass er das Magnetfeld (B) in der Nähe der Kontur (C1) erzeugt.

2. Triebwerk nach Anspruch 1, wobei der Magnetkreis eine Mehrzahl von Verbindungsarmen (24) umfasst, die so angeordnet sind, dass sie die Innenwand (32) und die Außenwand (34) des Kanals verbinden, wobei der Kanal eine ringförmige Form aufweist.

3. Hall-Effekt-Triebwerk (110) zum Entwickeln eines Schubs entlang einer Schubachse, wobei das Triebwerk umfasst:
einen Magnetkreis (150) zum Erzeugen eines Magnetfelds (B),
einen Stromkreis (160) mit einer Anode (162), einer ersten Kathode (164) und einer elektrischen Spannungsquelle (168) zum Emittieren von Elektronen mindestens über die erste Kathode (164) und zum Anziehen von Elektronen über die Anode (162),
wobei
- das Triebwerk (110) innerhalb einer Wand (122) angeordnet ist, die um die Schubachse (X) herum ausgebildet ist,
- der Magnetkreis (150) und der Stromkreis (160) so angeordnet sind, dass sie ein magnetisches (B) und elektrisches (E) Feld um die Wand (122) herum erzeugen, und
- in jedem Schnitt parallel zur Schubachse (X) und senkrecht zur Wand (122):
der Magnetkreis (150) einen stromaufwärts gelegenen Magnetpol (170) und einen stromabwärts gelegenen Magnetpol (172) aufweist, die im Wesentlichen auf der Oberfläche der Wand in einem Abstand voneinander angeordnet sind, und
der Magnetkreis (150) so angeordnet ist, dass das Magnetfeld in einer im Wesentlichen radialen Richtung in Bezug auf die Schubachse (X) auf Höhe des stromaufwärts gelegenen Magnetpols (170) ausgerichtet ist,
die Anode (162) und die erste Kathode (164) auf beiden Seiten des stromaufwärts gelegenen Magnetpols (170) angeordnet sind,
- die Wand (120) einen Partikelkonzentrator (136) zum Konzentrieren von Partikeln (P) aufweist,
wobei die Form des Konzentrators definiert ist durch eine sich in einer Ebene senkrecht zur Schubachse befindliche geschlossene Kontur (C2) und um die Wand herum verläuft,
wobei das Triebwerk **dadurch gekennzeichnet ist, dass** über einen großen Teil der Kontur hinweg jeder Schnitt des Konzentrators senkrecht zur Kontur parabolisch geformt ist und einen zur Kontur (C2) gehörenden Fokus (F2) aufweist, und
der Magnetkreis (150) so angeordnet ist, dass er das Magnetfeld in der Nähe der Kontur (C2) erzeugt.

4. Triebwerk nach einem der Ansprüche 1 bis 3, wobei die Kontur (C1, C2) ein Kreis, eine Ellipse oder ein Oval ist.

5. Triebwerk nach einem der Ansprüche 1 bis 4, wobei die Anode (62, 162) einen Abschnitt der Wand (122) oder einer der Innen- und Außenwände (32, 34) bildet.

6. Triebwerk nach einem der Ansprüche 1 bis 5, wobei die Anode (62, 162) in der Wand (122) oder einer der Innen- und Außenwände (32, 34) vertieft ausgebildet ist.

7. Raumfahrzeug (1; 101) mit mindestens einem Hall-Effekt-Triebwerk (10; 110) nach einem der Ansprüche 1 bis 6.

8. Raumfahrzeug (1; 101) mit mindestens einem Hall-Effekt-Triebwerk (10; 110) nach Anspruch 1 oder 2, wobei das Raumfahrzeug dazu ausgelegt ist, eine radial innerhalb der Innenwand (32) des Kanals (30) angeordnete Nutzlast mitzuführen.

9. Raumfahrzeug nach Anspruch 8, wobei die Kontur (C1) ein Kreis, eine Ellipse oder ein Oval ist.

10. Raumfahrzeug nach Anspruch 8 oder 9, wobei die Anode (62) einen Abschnitt einer der Wände (32, 34) bildet.

## Claims

1. A Hall-effect thruster (10) for developing thrust along a thrust axis, the thruster comprising:
a channel (30) allowing collection, acceleration and ejection of particles by the thruster when it is in operation, the channel (30) being delimited radially by an inner wall (32) and an outer wall (34);
an electric circuit (60) comprising an anode (62), a cathode (64), and an electrical voltage source (68) to emit electrons via the cathode (64) and to attract electrons via the anode (62);
a magnetic circuit (50) for generating a magnetic field (B) in the channel (30) axially downstream of the anode, the magnetic field being directed in a substantially radial direction with respect to the thrust axis (X);
the channel (30) being open on an upstream side of the thruster and including a particle concentrator (36) for collecting particles (P);
the shape of the concentrator being defined by a continuous contour (C1) situated in a plane perpendicular to the thrust axis and surrounding it;
the thruster being **characterized in that**
on a major portion of the contour, each section of the concentrator perpendicular to the contour has a parabolic shape and has a focus (F1) belonging to the contour (C1); and
the magnetic circuit (50) is arranged so as to generate the magnetic field (B) in the vicinity of the contour (C1).

2. The thruster according to claim 1, wherein the magnetic circuit comprises a plurality of connection arms (24) arranged so as to connect the inner wall (32) and the outer wall (34) of the channel, the channel having an annular shape.

3. A Hall-effect thruster (110) for developing a thrust along a thrust axis, the thruster including:
a magnetic circuit (150) for generating a magnetic field (B);
an electrical circuit (160) comprising an anode (162), a first cathode (164), and an electrical voltage source (168) for emitting electrons at least via the first cathode (164) and attracting electrons via the anode (162);
wherein:
. the thruster (110) is arranged inside a wall (122) formed around the thrust axis (X);
. the magnetic circuit (150) and the electric circuit (160) are arranged so as to generate magnetic (B) and electric (E) fields around the wall (122); and
. in any section parallel to the thrust axis (X) and perpendicular to the wall (122):
the magnetic circuit (150) has an upstream magnetic pole (170) and a downstream magnetic pole (172), disposed substantially at the surface of the wall at a distance from one another, and
the magnetic circuit (150) is arranged in such a manner that the magnetic field is oriented along a substantially radial direction with respect to the thrust axis (X) in front of the upstream magnetic pole (170);
the anode (162) and the first cathode (164) are situated on either side of the upstream magnetic pole (170);
. the wall (120) includes a particle concentrator (136) serving to concentrate particles (P);
the shape of the concentrator being defined by a closed contour (C2) situated in a plane perpendicular to the thrust axis and surrounding the wall;
the thruster being **characterized in that**:
on a major portion of the contour, each section of the concentrator perpendicular to the contour having a parabolic shape and having a focus (F2) belonging to the contour (C2);
the magnetic circuit (150) being arranged so as to generate the magnetic field in the vicinity of the contour (C2).

4. The thruster according to any one of claims 1 to 3, wherein said contour (C1, C2) is a circle, or an ellipse, or an oval.

5. The thruster according to any one of claims 1 to 4, wherein the anode (62, 162) constitutes a portion of the wall (122) or of one of said inner and outer walls (32, 34).

6. The thruster according to any one of claims 1 to 5, wherein the anode (62, 162) is formed as a hollow in the wall (122) or in one of said inner and outer walls (32, 34).

7. A spacecraft (1; 101) incorporating at least one Hall-effect thruster (10; 110) according to any one of claims 1 to 6.

8. The spacecraft (1; 101) incorporating at least one Hall-effect thruster (10; 110) according to claim 1 or 2, the spacecraft being configured to carry a useful load disposed radially inside the inner wall (32) of the channel (30).

9. The spacecraft according to claim 8, wherein said contour (C1) is a circle, or an ellipse, or an oval.

10. The spacecraft according to claim 8 or 9, wherein the anode (62) constitutes a portion of one of said walls (32, 34).
